# EUROPEAN PATENT APPLICATION

(11) **EP 3 293 685 A1**
(43) Date of publication of application: **14.03.2018**
(21) Application number: 17187745.9
(22) Date of filing: 24.08.2017
(51) Int. Cl.: G06Q 20/18, G06Q 20/20, G07G 1/00

(54) **INFORMATION PROCESSING APPARATUS THAT IDENTIFIES AN ITEM BASED ON A CAPTURED IMAGE THEREOF**

(30) Priority: 07.09.2016 JP 2016174855
(71) Applicant: Toshiba TEC Kabushiki Kaisha, Tokyo 141-8562 (JP)
(72) Inventor: IIZAKA, Hitoshi, Shinagawa-ku,, Tokyo 141-8562 (JP); MIYAKOSHI, Hidehiko, Shinagawa-ku,, Tokyo 141-8562 (JP); NAITOU, Hidehiro, Shinagawa-ku,, Tokyo 141-8562 (JP); HATANAKA, Yuichiro, Shinagawa-ku,, Tokyo 141-8562 (JP); SASAKI, Yuta, Shinagawa-ku,, Tokyo 141-8562 (JP)
(74) Representative: Takeuchi, Maya

(57) **Abstract**

An information processing system includes an image capturing device, a storage device in which first and second reference data are stored, and a processor. The first reference data include reference image data for a plurality of code-symbolized items, and the second reference data include reference image data unique to each of non-code-symbolized items. The processor is configured to control the image capturing device to start image capturing and start a code symbol detection process with respect to a captured image of a target item, and determine whether or not the target item is a code-symbolized item based on the first reference data. Further, the processor performs a first identification process based on detection of a code symbol on the target item when the target item is the code-symbolized item, and a second identification process based on the second reference data, when the target item is not the code-symbolized item.

## Description

### FIELD

Embodiments described herein relate generally to an information processing apparatus that identifies an item based on a captured image thereof.

### BACKGROUND

For some types of merchandise (hereinafter, referred to as "code-symbolized merchandise"), a symbol such as a barcode or a two-dimensional code is printed or attached (hereinafter, referred to as "symbols are attached"). Conventionally, such code-symbolized merchandise is identified by reading a symbol and analyzing the read symbol. The symbols may be attached to package of the merchandise, such as boxes, bags, or bottles, and may be attached to a bundling material wound around merchandise.

For another type of merchandise (non-code-symbolized merchandise), the symbol such as the barcode or the two-dimensional code may not be attached. For such non-code-symbolized merchandise, a generic object recognition technique can be employed for identifying the non-code-symbolized merchandise. According to the generic object recognition technique, feature data of the non-code-symbolized merchandise is extracted from image data of a captured image of the merchandise, and the extracted feature data are compared with reference data indicating feature data of reference merchandise.

However, when a portion of the code-symbolized merchandise other than the symbol thereon is imaged, an operation based on the generic object recognition technique may be started even with respect to the code-symbolized merchandise. For example, when objects printed on the package of the code-symbolized merchandise (for example, figures or pictures of vegetables, fruits, or the like printed on the package) are imaged, the printed object may be erroneously identified as the merchandise.

To this end, the present invention provides an information processing system comprising: an image capturing device; a storage device in which first reference data and second reference data are stored, the first reference data including reference image data corresponding to a plurality of code-symbolized items having a code symbol thereon, and the second reference data including reference image data unique to each of non-code-symbolized items; and a processor configured to: control the image capturing device to start image capturing and start a code symbol detection process with respect to an image of a target item to be identified that is captured through the image capturing, perform determination of whether or not the target item is a code-symbolized item, based on comparison of image data of the captured image of the target item with the first reference data, perform a first identification process to identify the target item based on detection of a code symbol on the target item through the code symbol detection process, upon determining that the target item is the code-symbolized item, and perform a second identification process to identify the target item based on comparison of the image data of the captured image of the target item with the second reference data, upon determining that the target item is not the code-symbolized item.

Preferably, the processor performs the determination when no code symbol has been detected from the image of the target item through the code symbol detection process.

Preferably, the processor does not perform the determination when a code symbol has been detected from the image of the target item through the code symbol detection process.

Preferably, the processor does not perform any identification process based on the second reference data, when the processor determines that the target item is the code-symbolized item.

Preferably, the processor is further configured to perform a third identification process to identify the target item based on comparison of the image data of the captured image of the target item with the second reference data, after the first identification process, when the processor determines that the target item is the code-symbolized item and cannot identify the target item through the first identification process.

Preferably, the processor re-performs the first identification process, when the processor cannot identify the target item through the third identification process.

Preferably, during the third identification process, the processor selects, as candidates, one or more non-code-symbolized items based on similarity between reference image data thereof included in the second reference data and the image data of the target item.

Preferably, during the third identification process, the processor stores, in the storage device, an identifier of one of the candidates, upon determining that similarity between reference image data of said one of the candidates and the image data of the target item exceeds a threshold, and determines the target item to be said one of the candidates when none of the candidates has been selected by a user to be the target item for a predetermined period of time.
Preferably, the reference image data of the first reference data are common to the plurality of code-symbolized items.
Preferably, the reference image data of the first reference data include data of a package shape common to the plurality of code-symbolized items.

The present invention further relates to a method of identifying an item based on a captured image thereof, comprising: starting image capturing by an image capturing device and a code symbol detection process with respect to an image of a target item to be identified that is captured through the image capturing; performing determination of whether or not the target item is a code-symbolized item, based on comparison of image data of the captured image of the target item with first reference data stored in a storage device, the first reference data including reference image data corresponding to a plurality of code-symbolized items having a code symbol thereon; upon determining that the target item is the code-symbolized item, performing a first identification process to identify the target item based on detection of a code symbol on the target item through the code symbol detection process; and upon determining that the target item is not the code-symbolized item, performing a second identification process to identify the target item based on comparison of the image data of the captured image of the target item with second reference data stored in the storage device, the second reference data including reference image data unique to each of non-code-symbolized items.

Preferably, the determination is performed when no code symbol has been detected from the image of the target item through the code symbol detection process.

The method may further comprise: upon determining that the target item is the code-symbolized item and that the target item has not been identified through the first identification process, performing a third identification process to identify the target item based on comparison of the image data of the captured image of the target item with the second reference data, after the first identification process.

Preferably, the third identification process comprises: selecting, as candidates, one or more non-code-symbolized items based on similarity between reference image data thereof included in the second reference data and the image data of the target item.

Preferably, the third identification process further comprises: storing, in the storage device, an identifier of one of the candidates, upon determining that similarity between reference image data of said one of the candidates and the image data of the target item exceeds a threshold; and determining the target item to be said one of the candidates when none of the candidates has been selected by a user to be the target item for a predetermined period of time.

Preferably, the reference image data of the first reference data are common to the plurality of code-symbolized items.

Preferably, the reference image data of the first reference data include data of a package shape common to the plurality of code-symbolized items.

The present invention further relates to a non-transitory computer-readable medium storing instructions to cause a computing device to carry out a method of identifying an item based on a captured image thereof, the method comprising: starting image capturing by an image capturing device and a code symbol detection process with respect to an image of a target item to be identified that is captured through the image capturing; performing determination of whether or not the target item is a code-symbolized item, based on comparison of image data of the captured image of the target item with first reference data stored in a storage device, the first reference data including reference image data corresponding to a plurality of code-symbolized items having a code symbol thereon; upon determining that the target item is the code-symbolized item, performing a first identification process to identify the target item based on detection of a code symbol on the target item through the code symbol detection process; and upon determining that the target item is not the code-symbolized item, performing a second identification process to identify the target item based on comparison of the image data of the captured image of the target item with second reference data stored in the storage device, the second reference data including reference image data unique to each of non-code-symbolized items.

Preferably, the determination is performed when no code symbol has been detected from the image of the target item through the code symbol detection process.

Preferably, the method further comprises: upon determining that the target item is the code-symbolized item and that the target item has not been identified through the first identification process, performing a third identification process to identify the target item based on comparison of the image data of the captured image of the target item with the second reference data, after the first identification process.

### DESCRIPTION OF THE DRAWINGS

Fig. 1 is a perspective view of a check-out system including a merchandise reading apparatus according to an embodiment.
Fig. 2 is a block diagram showing a hardware configuration of the merchandise reading apparatus shown in Fig. 1.
Fig. 3 illustrates a data configuration of a merchandise master stored in the merchandise reading apparatus shown in Fig. 2.
Fig. 4 illustrates a data configuration of a dictionary stored in the merchandise reading apparatus shown in Fig. 2.
Fig. 5 is a block diagram showing a hardware configuration of a POS terminal shown in Fig. 1.
Fig. 6 is a functional block diagram showing a functional configuration of the merchandise reading apparatus.
Fig. 7 is a flow chart showing a flow of a control process performed by the merchandise reading apparatus.
Fig. 8 is a flow chart showing a flow of a control process performed by the merchandise reading apparatus.
Fig. 9 illustrates an example of a screen displayed by the merchandise reading apparatus.
Fig. 10 is a flow chart showing a flow of a control process performed by the POS terminal.
Fig. 11 is a flow chart showing a flow of a control process performed by a merchandise reading apparatus according to a first modification example.
Fig. 12 is a flow chart showing a flow of a control process performed by a merchandise reading apparatus according to a second modification example.
Fig. 13 is a perspective view of a self-service POS according to another embodiment.
Fig. 14 is a block diagram showing a hardware configuration of the self-service POS shown in Fig. 13.

### DETAILED DESCRIPTION

An embodiment provides an information processing system includes an image capturing device, a storage device in which first reference data and second reference data are stored, and a processor. The first reference data include reference image data corresponding to a plurality of code-symbolized items having a code symbol thereon, and the second reference data include reference image data unique to each of non-code-symbolized items. The processor is configured to control the image capturing device to start image capturing and start a code symbol detection process with respect to an image of a target item to be identified that is captured through the image capturing, perform determination of whether or not the target item is a code-symbolized item, based on comparison of image data of the captured image of the target item with the first reference data, perform a first identification process to identify the target item based on detection of a code symbol on the target item through the code symbol detection process, upon determining that the target item is the code-symbolized item, and perform a second identification process to identify the target item based on comparison of the image data of the captured image of the target item with the second reference data, upon determining that the target item is not the code-symbolized item.

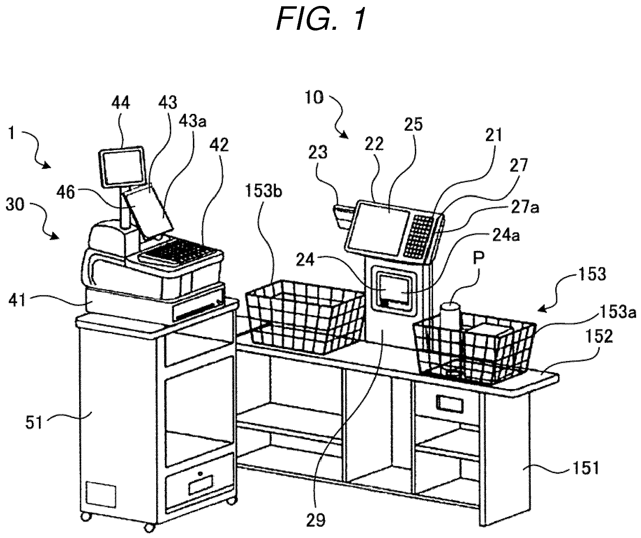

Hereinafter, with reference to Figs. 1 to 14, an information processing apparatus and a program will be described in detail according to embodiments. In the embodiments, a merchandise reading apparatus will be described as an example of the information processing apparatus. In addition, in the embodiments, merchandise will be described as an example of an article. The embodiment is not limited to the embodiments described below.

Fig. 1 is a perspective view of an exterior configuration of a check-out system 1 according to the embodiment. The check-out system 1 is a system which is provided at a discount shop such as a supermarket or a convenience store and executes a sales registration process or a payment process by inputting merchandise information of the merchandise to be sold. As shown in Fig. 1, the check-out system 1 includes a merchandise reading apparatus 10 and a POS terminal 30.

The merchandise reading apparatus 10, which can be connected to the POS terminal 30 for data transmission and reception, is placed on a counter table 151 which has a horizontal elongated shape. The merchandise reading apparatus 10 has a housing 29 which is thin and rectangular.

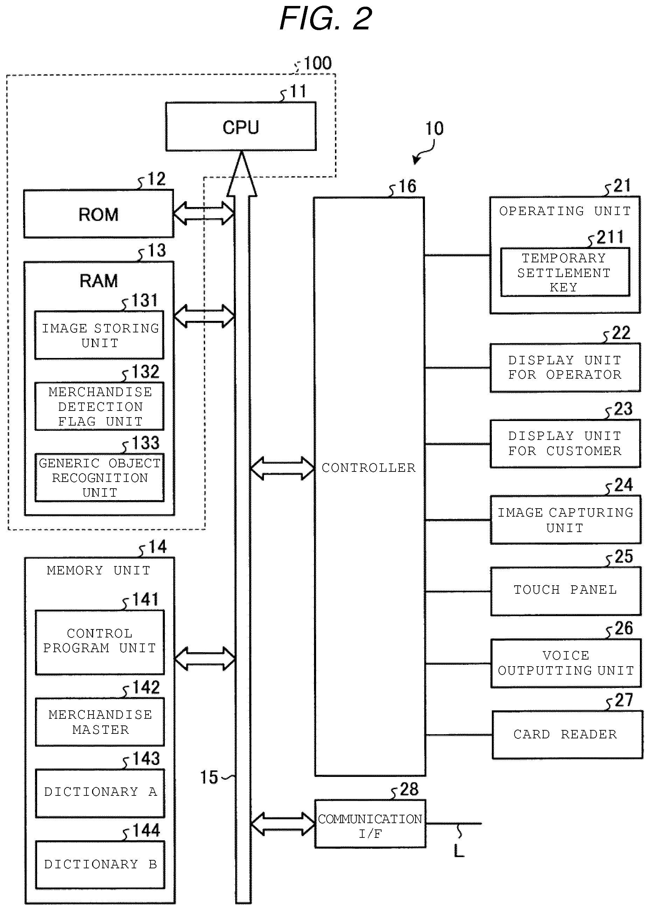

A reading window 24a of an image capturing unit 24 is provided in a front surface of the housing 29. A display 22 for operator, a display 23 for customer, an operating unit 21, and a card reader 27 which includes a groove 27a are provided on an upper side of the housing 29. A touch panel 25 is provided on the display 22 for operator. The operating unit 21 includes a temporary settlement key 211 (refer to Fig. 2) which causes finishing of a process in the merchandise reading apparatus 10.

A load receiving surface 152 is formed on an upper surface of the counter table 151. Shopping baskets 153 for accommodating merchandise P are placed on the load receiving surface 152. The shopping baskets 153 include a first shopping basket 153a, which is brought by a customer, and a second shopping basket 153b which is placed at a position on a side of the merchandise reading apparatus 10 opposite to the side on which the first shopping basket 153a is placed.

The merchandise P which is purchased by the customer is accommodated in the first shopping basket 153a. An operator who operates the merchandise reading apparatus 10 takes out the merchandise P from the first shopping basket 153a and moves the merchandise P into the second shopping basket 153b. The operator operates the temporary settlement key 211 after this operation is repeatedly performed on all of the merchandise P in the first shopping basket 153a. The second shopping basket 153b into which the merchandise P is put, is moved to a location (not shown), where the customer bags the merchandise P. The customer moves the merchandise P inside the second shopping basket 153b into a shopping bag at the location.

The merchandise P passes a front of the reading window 24a of the merchandise reading apparatus 10 in a movement process of the merchandise P from the first shopping basket 153a to the second shopping basket 153b. At this time, the merchandise reading apparatus 10 captures an image including the merchandise P using the image capturing unit 24 (refer to Fig. 2) disposed in the reading window 24a.

Here, as representative kinds of merchandise, there are merchandise to each of which a symbol such as a barcode or a two-dimensional code is attached (hereinafter referred to as "code-symbolized merchandise"), and merchandise to each of which a symbol is not attached (hereinafter referred to as "non-code-symbolized merchandise"; for example, vegetables such as leaf vegetables or fruits). In addition, as the code-symbolized merchandise, there is packaged merchandise such as merchandise accommodated in a box and a bottle filled with drinking water. In the case of such merchandise, symbols are attached onto the boxes and bottles. In addition, the code-symbolized merchandise includes merchandise in which band-like seals are wound around leaf vegetables, for example (hereinafter referred to as "seal-wound merchandise"). In the case of such merchandise, symbols are attached to the seals.

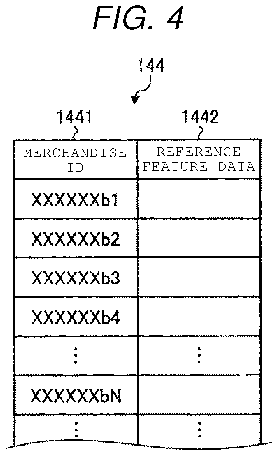

When the imaged merchandise is code-symbolized merchandise, a merchandise ID of the merchandise, is acquired based on the read symbol, and one kind of code-symbolized merchandise is specified. Meanwhile, when the imaged merchandise is not code-symbolized merchandise, the merchandise reading apparatus 10 extracts feature data indicating features of the imaged non-code-symbolized merchandise, from a captured image. The merchandise reading apparatus 10 calculates a degree of similarity by comparing the extracted feature data with the feature data of a plurality of non-code-symbolized merchandise stored in a dictionary B 144 (refer to Fig. 4), and extracts one or plural ones of the non-code-symbolized merchandise corresponding to the imaged merchandise as candidates. This series of processes is called a generic object recognition process. Regarding such a generic object recognition process, various recognition techniques in the following documents can be employed.

Keiji Yanai, "The Current State and Future Directions on Generic Object Recognition", journal of information processing society of Japan, Vol. 48, No. SIG16 [searched in 24 January, 2013], an internet URL: http://mm.cs.uec.ac.jp/IPSJ-TCVIM-Yanai.pdf

The merchandise reading apparatus 10 automatically confirms one kind of non-code-symbolized merchandise, which has a predetermined value (for example, 95%) or more of a degree of similarity with respect to the imaged merchandise, as the imaged merchandise. Automatic confirmation means that the imaged merchandise is automatically recognized as one kind of specific non-code-symbolized merchandise without selection by an operator. The merchandise reading apparatus 10 reads a merchandise ID that specifies the automatically-confirmed non-code-symbolized merchandise, from a merchandise master 142 (refer to Fig. 2). Also, the merchandise reading apparatus 10 transmits the read merchandise ID to the POS terminal 30.

Meanwhile, when there is no non-code-symbolized merchandise having a degree of similarity which is high enough to be automatically confirmed, the merchandise reading apparatus 10 causes the display 22 for operator to display a certain number (for example, four in descending order from the non-code-symbolized merchandise having the highest degree of similarity) of non-code-symbolized merchandise in a descending order of the degrees of similarity, each of which is calculated through the generic object recognition process and has the degree of similarity equal to or more than a threshold value (for example, 50% or more), as candidates. The operator operates a touch panel 25 to select non-code-symbolized merchandise corresponding to the imaged merchandise from the non-code-symbolized merchandise displayed as the candidates. The merchandise reading apparatus 10 reads the merchandise ID, which specifies the selected non-code-symbolized merchandise, from the merchandise master 142. Also, the merchandise reading apparatus 10 transmits the read merchandise ID to the POS terminal 30.

The POS terminal 30 is placed on an upper surface of a drawer 41 on a check-out table 51 which is formed in an L shape with the counter table 151. The drawer 41 accommodates cash (e.g., bills and coins) deposited from the customer in a cash box. The drawer 41 accommodates change to be handed over to the customer in the cash box. When the drawer 41 receives a control of an opening operation from the POS terminal 30, the cash box is opened.

An operating unit 42, which is operated by the operator, is disposed on the upper surface of the POS terminal 30. A display 43 for operator, which displays information toward the operator, is provided on a side farther than the operating unit 42 from the operator. The display 43 for operator displays information with respect to the operator. A touch panel 46 is stacked on a display surface 43a of the display 43 for operator. A display 44 for customer is provided to rotatably stand on a side farther than the display 43 for operator from the operator. The display 44 for customer displays information with respect to the customer.

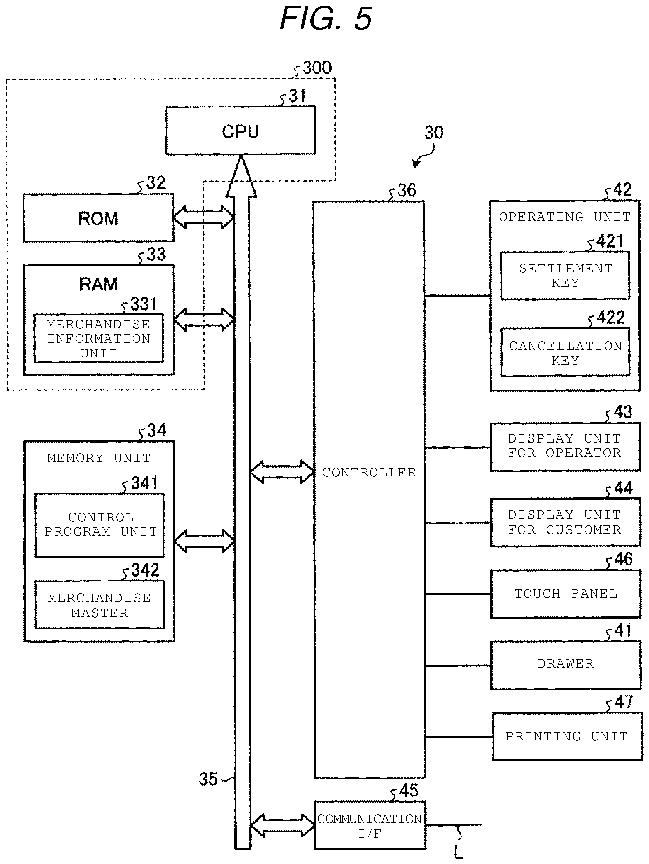

The POS terminal 30 reads merchandise information from a merchandise master 342 (refer to Fig. 5), which is included in the POS terminal 30, based on the merchandise ID received from the merchandise reading apparatus 10, and executes a sales registration process of the merchandise. The sales registration process means a process of displaying a merchandise name or a price (collectively referred to as "merchandise information") of the merchandise based on the merchandise ID and storing the merchandise information in a merchandise information unit 331 (refer to Fig. 5).

When a settlement key 421 (refer to Fig. 5) in the POS terminal 30 is operated after the temporary settlement key 211 is operated, the POS terminal 30 executes a payment process for the merchandise which is subjected to the sales registration process. The payment process means a process of calculating and displaying change, a process of instructing a change machine to issue change, a process of issuing a receipt on which merchandise information or payment information (total amount of money, deposit amount, change amount, and the like) is printed, and the like. Moreover, a process in which the sales registration process and the payment process are combined is referred to as a transaction process. In addition, the information which is subjected to the transaction process is referred to as sales information.

Next, a hardware configuration of the merchandise reading apparatus 10 will be described using a block diagram shown in Fig. 2. As shown in Fig. 2, the merchandise reading apparatus 10 includes a central processing unit (CPU) 11, which is a main controller. The merchandise reading apparatus 10 also includes a read only memory (ROM) 12 which stores various programs. In addition, the merchandise reading apparatus 10 includes a random access memory (RAM) 13 which functions as a work area of the CPU 11. Also, the merchandise reading apparatus 10 includes a memory unit 14, which includes an HDD, a flash memory, or the like which stores various programs, and the like. The CPU 11, the ROM 12, the RAM 13, and the memory unit 14 are connected to each other through a data bus 15.

The CPU 11, the ROM 12, and the RAM 13 configure a control unit 100. The control unit 100 executes a control process which is described below when the CPU 11 is operated according to the control program stored in a control program unit 141 of the memory unit 14 and is loaded to the RAM 13.

The RAM 13 also stores various kinds of data. The RAM 13 includes an image storing unit 131, a merchandise detection flag unit 132, and a generic object recognition unit 133. The image storing unit 131 stores an image including the merchandise which is captured by the image capturing unit 24, which is described below. The merchandise detection flag unit 132 stores a merchandise detection flag indicating whether or not merchandise is detected from a captured image. When merchandise is detected from a captured image, the merchandise detection flag unit 132 sets a merchandise detection flag "1". When merchandise is not detected from a captured image, the merchandise detection flag unit 132 stores a merchandise detection flag "0". The generic object recognition unit 133 stores a generic object recognition flag indicating whether or not the generic object recognition process is executed for the detected merchandise. When the generic object recognition process is executed, the generic object recognition unit 133 sets a generic object recognition flag "1". When the generic object recognition process is not executed, the generic object recognition unit 133 sets a generic object recognition flag "0". In a first modification example and a second modification example described below, the RAM 13 further includes a code-symbolized merchandise flag unit (not shown). When it is determined that the imaged merchandise is code-symbolized merchandise, the code-symbolized merchandise flag unit stores a code-symbolized merchandise flag "1". When it is determined that the imaged merchandise is not code-symbolized merchandise, the code-symbolized merchandise flag unit stores a code-symbolized merchandise flag "0".

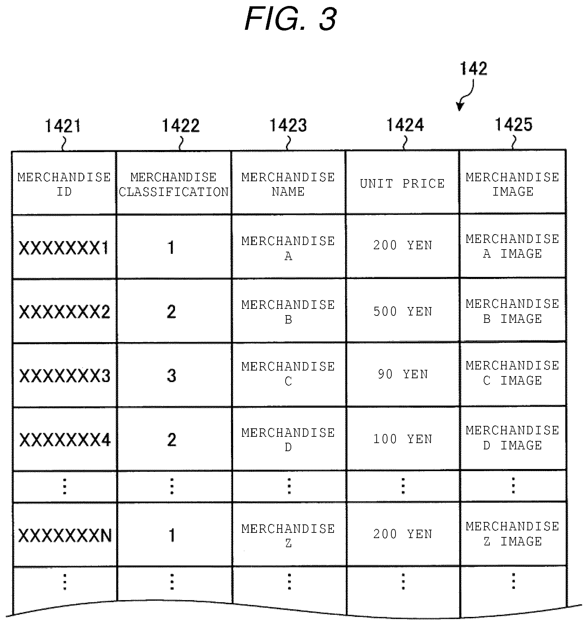

The memory unit 14 includes the control program unit 141, the merchandise master 142, a dictionary A 143, and the dictionary B 144. The control program unit 141 stores a program for controlling the merchandise reading apparatus 10. The merchandise master 142 (to be described below in Fig. 3) stores various kinds of information regarding merchandise for each of the non-code-symbolized merchandises. The dictionary B 144 is described below using Fig. 4.

The dictionary A 143 is a dictionary in which features of code-symbolized merchandise are stored. That is, the dictionary A 143 stores features of merchandise, which are not targets for the generic object recognition.

The dictionary A 143 stores common feature data indicating features (for example, feature data indicating textures or unevenness state of boxes or films of packaged merchandise, feature data indicating textures or unevenness state of packaging films of PET bottles, and textures or unevenness state of seals bundling merchandise) which are common in code-symbolized merchandise. For example, even when an image of vegetables or fruits is printed on a package, such an image indicates specific feature data of a package (data indicating colors, patterns, unevenness state, and shapes). The feature data of such an image are different to the feature data of actual vegetables or fruits. Feature data are information indicating the features of the merchandise, such as colors, patterns, unevenness state, and shapes of surface of the merchandise.

The control unit 100 is connected to the operating unit 21, the display 22 for operator, the display 23 for customer, the image capturing unit 24, the touch panel 25, a voice outputting unit 26, and the card reader 27 through the data bus 15 and a controller 16. In addition, the control unit 100 is connected to a communication interface (I/F) 28 through the data bus 15. The communication I/F 28 is connected to the POS terminal 30 through a communication line L.

The image capturing unit 24 includes a color CCD sensor or a color CMOS sensor. The image capturing unit 24 captures an image including merchandise passing the front of the reading window 24a. The voice outputting unit 26 is a voice circuit, a speaker, and the like for generating a warning sound set in advance. The voice outputting unit 26 performs informing using a voice such as a warning sound under the control of the control unit 100. The card reader 27 reads card information from a card scanned through the groove 27a.

Next, a data configuration of the merchandise master 142 is shown using Fig. 3. The merchandise master 142 stores merchandise names, unit prices, and merchandise images of merchandise in correspondence with the merchandise IDs of the code-symbolized merchandise and the non-code-symbolized merchandise. As shown in Fig. 3, the merchandise master 142 includes a merchandise ID unit 1421, a merchandise classification unit 1422, a merchandise name unit 1423, a unit price unit 1424, and a merchandise image unit 1425.

The merchandise ID unit 1421 stores merchandise IDs of merchandise. The merchandise classification unit 1422 stores classification codes for classifying merchandise, which is specified by the merchandise IDs, into respective categories. The merchandise name unit 1423 stores merchandise names of merchandise, which is specified by merchandise IDs. The unit price unit 1424 stores unit prices of merchandise specified by the merchandise IDs. The merchandise image unit 1425 stores representative images indicating features of merchandise specified by the merchandise IDs.

Fig. 4 is a memory map showing a data structure of the dictionary B 144. The dictionary B 144 is a dictionary in which feature data of non-code-symbolized merchandise, to each of which a symbol is not attached, is stored. That is, the dictionary B 144 is a dictionary in which features of merchandise, which are targets for the generic object recognition, are stored. In Fig. 4, the dictionary B 144 stores feature data of each kinds of merchandise, in correspondence with the merchandise ID, of non-code-symbolized merchandise which is merchandise (for example, fruits and vegetables, or perishable foods) to each of which a symbol is not attached. The dictionary B 144 includes a merchandise ID unit 1441 and a reference feature data unit 1442. The merchandise ID unit 1441 stores merchandise IDs of merchandise. The reference feature data unit 1442 stores reference feature data of an image indicating features of a non-code-symbolized merchandise, in correspondence with the merchandise ID. The control unit 100 compares feature data of the imaged merchandise with reference feature data of the non-code-symbolized merchandise stored in the reference feature data unit 1442, and executes the generic object recognition process to calculate degrees of similarity between the imaged merchandise and the non-code-symbolized merchandise.

Next, a hardware configuration of the POS terminal 30 will be described using a block diagram shown in Fig. 5. As shown in Fig. 5, the POS terminal 30 includes a CPU 31, which is a main controller. The POS terminal 30 includes a ROM 32 which stores various programs. The POS terminal 30 includes a RAM 33 which functions as a work area of the CPU 31. In addition, the POS terminal 30 includes a memory unit 34 includes an HDD or a flash memory storing various programs, and the like. The CPU 31, the ROM 32, the RAM 33, and the memory unit 34 are connected to each other through a data bus 35.

The CPU 31, the ROM 32, and the RAM 33 configure a control unit 300. The control unit 300 executes a control process described below when the CPU 31 is operated according to a control program stored in a control program unit 341 of the memory unit 34 and is located to the RAM 33.

The RAM 33 also stores various kinds of data. The RAM 33 includes the merchandise information unit 331. The merchandise information unit 331 stores merchandise information of merchandise which is subjected to the sales registration process of the POS terminal 30.

The memory unit 34 includes the control program unit 341 and the merchandise master 342. The control program unit 341 stores a program for controlling the POS terminal 30. The merchandise master 342 has the same configuration as that of the merchandise master 142 of the merchandise reading apparatus 10. Since the sales registration process or a cancellation process may be additionally executed, the POS terminal 30 itself stores the merchandise master 342. Although it is not shown, the memory unit 34 includes a dictionary which has the same configuration as that of the dictionary A 143 or the dictionary B 144.

The control unit 300 is connected to the operating unit 42, which includes the settlement key 421 and a cancellation key 422, the display 43 for operator, the display 44 for customer, the touch panel 46, the drawer 41, and a printing unit 47 through the data bus 35 and a controller 36. The settlement key 421 is operated when the payment process of the transaction is executed. The cancellation key 422 is a key that is operated for deleting merchandise information of merchandise, which is immediately previously subjected to the sales registration process, from the merchandise information unit 331. When the cancellation key 422 is operated, the merchandise information of the merchandise, which is immediately previously subjected to the sales registration process, is deleted, and the sales registration process relating to the merchandise concerned is invalidated. In addition, the control unit 300 is connected to a communication I/F 45 through the data bus 35, and the communication I/F 45 is connected to the merchandise reading apparatus 10 through the communication line L.

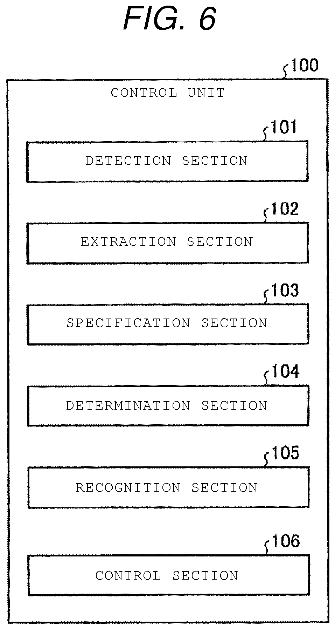

Hereinafter, a control process of the merchandise reading apparatus 10 and the POS terminal 30 will be described. Fig. 6 is a functional block diagram showing a functional configuration of the merchandise reading apparatus 10. The control unit 100 functions as a detection section 101, an extraction section 102, a specification section 103, a determination section 104, a recognition section 105, and a control section 106 according to the control program stored in the control program unit 141 of the memory unit 14.

The detection section 101 has a function of detecting a symbol from an image obtained by imaging merchandise.

The extraction section 102 has a function of extracting feature data indicating features of the merchandise, from an image.

The specification section 103 has a function of specifying merchandise based on a merchandise ID included in a symbol, on the condition that the symbol is detected.

The determination section 104 has a function of comparing the feature data of an imaged merchandise with the first feature data indicating features of the code-symbolized merchandise to each of which a symbol is attached, and of determining whether or not the imaged merchandise is code-symbolized merchandise based on the degree of similarity, on the condition that a symbol is not detected.

The recognition section 105 has a function of comparing the feature data of imaged merchandise with the second feature data indicating features of the non-code-symbolized merchandise to each of which a symbol is not attached, and of recognizing non-code-symbolized merchandise corresponding to the imaged merchandise based on the degree of similarity.

The control section 106 has a function of changing a control process of the recognition section 105 according to the determination result of the determination section 104.

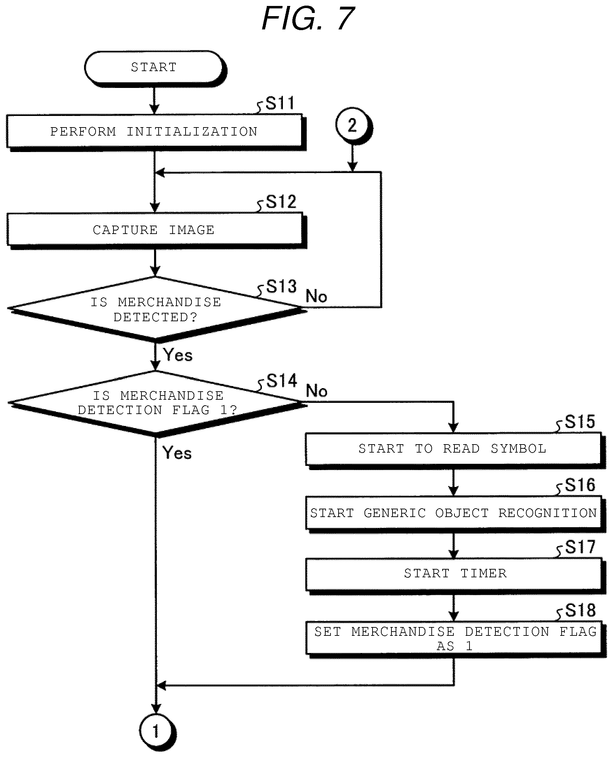

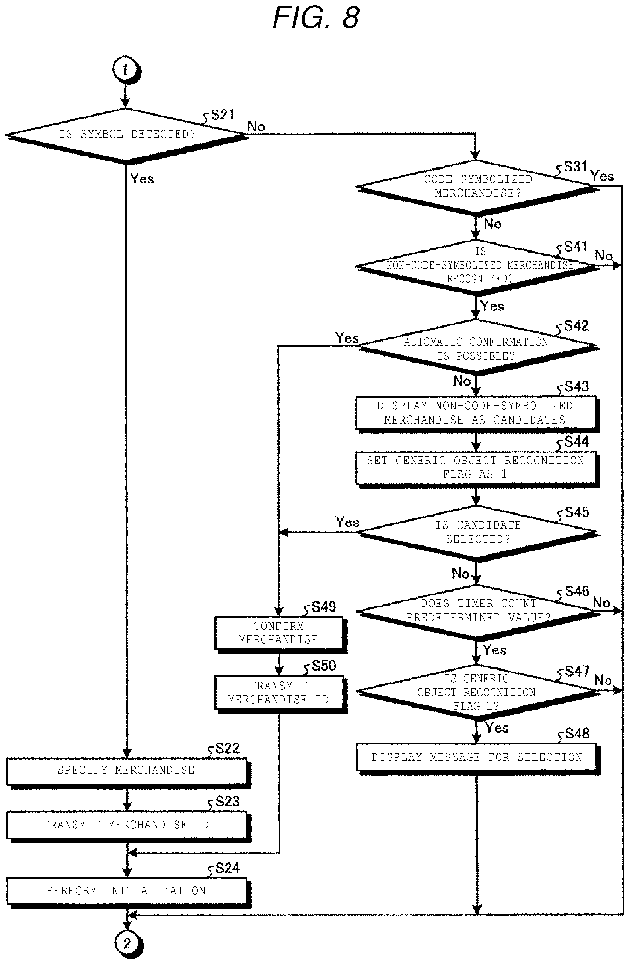

Figs. 7 and 8 are flow charts showing a flow of a control process of the merchandise reading apparatus 10. As shown in Fig. 7, the control unit 100 executes initialization of the merchandise reading apparatus 10 (S11). The initialization in S11 includes a process of causing the merchandise detection flag unit 132 to store the merchandise detection flag "0", a process of causing the generic object recognition unit 133 to store the generic object recognition flag "0", and a process of resetting a timer (not shown).

Next, the control unit 100 controls the image capturing unit 24 to capture an image including merchandise passing the front of the reading window 24a, and causes the image storing unit 131 to store the image (S12). The control unit 100 determines whether merchandise is detected from the image stored in the image storing unit 131 (S13). When an image of the merchandise can be cut out from the captured image, the control unit 100 determines that the merchandise is detected. When it is determined that the merchandise is not detected (No in S13), the control unit 100 causes the process to return to S12, and when it is determined that the merchandise is detected (Yes in S13), the control unit 100 determines whether or not the merchandise detection flag set in the merchandise detection flag unit 132 is "1" (S14).

When it is determined that the merchandise detection flag is not "1" (that is, the merchandise detection flag is "0") (No in S14), the control unit 100 starts to read a symbol of the merchandise that is detected in S13 (S15). The start of reading the symbol in S15 means that a symbol is analyzed when the symbol is attached to the merchandise, by using a pattern recognition technique, for example. In addition, the control unit 100 (in particular, the extraction section 102) starts the generic object recognition process of extracting feature data, for the detected merchandise (S16). The control unit 100 starts a timer (not shown) (S17). The control unit 100 sets the merchandise detection flag in the merchandise detection flag unit 132 as "1" (S18).

Hereinafter, Fig. 8 will be described. After the process of S18, the control unit 100 (in particular, the detection section 101) determines whether or not a symbol is detected as the result of the process of S15 (S21). Even when it is determined that the merchandise detection flag is "1" in S14 (Yes in S14), it is determined whether or not the symbol is detected (S21). When it is determined that the symbol is detected (Yes in S21), the control unit 100 specifies one kind of merchandise based on the merchandise ID, which specifies the merchandise, included in the detected symbol (S22). The control unit 100 transmits the merchandise ID of the specified merchandise to the POS terminal 30 (S23). The control unit 100 executes the same initialization as in S11 (S24). Then, the control unit 100 causes the process to return to S12. The symbol may not include a merchandise ID. In this case, the control unit 100 transmits the merchandise ID, which is acquired based on information included in the symbol, to the POS terminal 30 in S22.

Meanwhile, when it is determined that a symbol is not detected in S21 (No in S21), the control unit 100 compares feature data of the imaged merchandise with the common feature data of the code-symbolized merchandise stored in the dictionary A 143 to calculate the degree of similarity. The control unit 100 (in particular, the determination section 104) determines whether the imaged merchandise is code-symbolized merchandise based on the calculated degree of similarity (S31). When the calculated degree of similarity is a predetermined value or more (for example, the degree of similarity is 80% or more), the control unit 100 determines that the imaged merchandise is code-symbolized merchandise. In a case of packaged merchandise, the control unit 100 determines that the degree of similarity is a predetermined value or more based on the texture or the unevenness state of the imaged box or film. In addition, in a case of seal-wound merchandise, the control unit 100 determines that the degree of similarity is a predetermined value or more based on the texture or the unevenness state of the imaged seal.

When it is determined that the imaged merchandise is code-symbolized merchandise (Yes in S31), the control unit 100 causes the process to return to S12. When it is determined that the imaged merchandise is not code-symbolized merchandise (No in S31), the control unit 100 determines whether or not the non-code-symbolized merchandise was recognized based on the generic object recognition process that started in S16 (S41). When it is determined that no non-code-symbolized merchandise was recognized (No in S41), the control unit 100 causes the process to return to S12. When it is determined that non-code-symbolized merchandise was recognized (Yes in S41), the control unit 100 determines whether or not the imaged merchandise can be automatically confirmed (S42). When the degree of similarity, which is calculated based on the feature data of the imaged merchandise and the feature data of the non-code-symbolized merchandise, is a predetermined value (for example, 95%) or more, the control unit 100 determines that the imaged merchandise can be automatically confirmed.

When it is determined that the imaged merchandise can be automatically confirmed (Yes in S42), the control unit 100 confirms the imaged merchandise as the non-code-symbolized merchandise (S49). The control unit 100 reads a merchandise ID of the confirmed merchandise, from the merchandise ID unit 1441, and transmits the read merchandise ID to the POS terminal 30 (S50). At this time, the control unit 100 reads the merchandise information (a merchandise name, a price, and the like) of the merchandise concerned, from the merchandise master 142 based on the read merchandise ID, and causes the display 22 for operator and the display 23 for customer to display the read merchandise information. Then, the control unit 100 executes the process of S24.

Meanwhile, when it is determined that the imaged merchandise cannot be automatically confirmed in S42 (No in S42), the control unit 100 (the recognition section 105) recognizes one or plural of non-code-symbolized merchandise which are candidates of the imaged merchandise, and causes the display 22 for operator to display the one or plural of non-code-symbolized merchandise (S43). The control unit 100 causes the display 22 for operator to display, as the candidates of the imaged merchandise, non-code-symbolized merchandise in order from the non-code-symbolized merchandise having the highest degree of similarity, from among the non-code-symbolized merchandise, each of which the calculated degree of similarity is a threshold value or more (for example, 50% or more). The control unit 100 sets the generic object recognition flag indicating that the generic object recognition process has been executed as "1" (S44).

Next, the control unit 100 determines whether or not one kind of non-code-symbolized merchandise is selected from the non-code-symbolized merchandise displayed on the display 22 for operator (S45). The operator selects one of the non-code-symbolized merchandise by operating the touch panel 25 at a position corresponding to the non-code-symbolized merchandise displayed on the display 22 for operator. When it is determined that one of the non-code-symbolized merchandise is selected (Yes in S45), the control unit 100 executes the process of S49. When it is determined that one of the non-code-symbolized merchandise is not selected (No in S45), the control unit 100 determines whether or not the timer, which started in S17, clocks a predetermined value (for example, 5 seconds) (S46). When it is determined that the timer clocked the predetermined value (Yes in S46), the control unit 100 determines whether or not the generic object recognition flag set in the generic object recognition unit 133 is "1" (S47). When it is determined that the generic object recognition flag is "1" (Yes in S47), the control unit 100 displays a message for urging the operator to select one of the non-code-symbolized merchandise from the non-code-symbolized merchandise displayed in S43 (S48). The control unit 100 causes the process to return to S12. When the timer has not clocked the predetermined value (No in S46) or when the generic object recognition flag is not "1" (No in S47), the control unit 100 causes the process to return to S12.

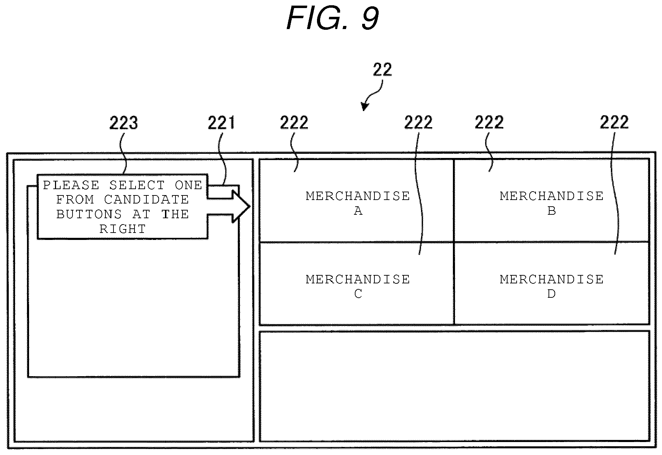

Fig. 9 illustrates an example of a screen displayed when the control unit 100 causes the display 22 for operator to display an announcement for urging the operator to select one of non-code-symbolized merchandise from the non-code-symbolized merchandise displayed as the candidates, in S48. In Fig. 9, the control unit 100 causes the display 22 for operator to display an image display section 221 and a candidate merchandise section 222. The image display section 221 displays the captured image which is captured by the image capturing unit 24. The candidate merchandise section 222 acquires merchandise information (merchandise names, prices, images of merchandise, and the like) of the non-code-symbolized merchandise which is displayed as the candidates in S43, from the merchandise master 142 and displays the acquired merchandise information. In Fig. 9, merchandise information of four kinds of non-code-symbolized merchandise, which is merchandise A, merchandise B, merchandise C, and merchandise D, is displayed. The operator touches one of the non-code-symbolized merchandise corresponding to the imaged merchandise and thereby selects the non-code-symbolized merchandise from the displayed non-code-symbolized merchandise. As the process of S48, the control unit 100 displays an announcement 223 for urging the operator to select one of the non-code-symbolized merchandise from the displayed non-code-symbolized merchandise as an announcement with respect to the operator.

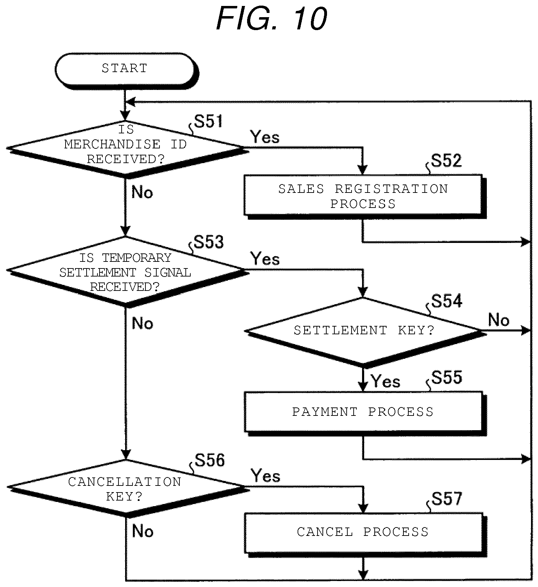

Hereinafter, a control process of the POS terminal 30 will be described. Fig. 10 is a flow chart showing a flow of the control process of the POS terminal 30. In Fig. 10, the control unit 300 determines whether or not the merchandise ID is received from the merchandise reading apparatus 10 (S51). When it is determined that the merchandise ID is received (Yes in S51), the control unit 300 searches the merchandise master 342 based on the received merchandise ID and acquires merchandise information relating to the merchandise. The control unit 300 executes a merchandise registration process of the merchandise based on the acquired merchandise information (S52). That is, the POS terminal 30 automatically executes the sales registration process based on the received merchandise ID. Then, the control unit 300 causes the process to return to S51.

In addition, when it is determined that the merchandise ID is not received (No in S51), the control unit 300 determines whether or not a temporary settlement signal is received from the merchandise reading apparatus 10 (S53). When it is determined that a temporary settlement signal is received from the merchandise reading apparatus 10 (Yes in S53), the control unit 300 determines whether or not the settlement key 421 is operated (S54). When it is determined that the settlement key 421 is operated (Yes in S54), the control unit 300 executes the payment process for the transaction based on the merchandise information stored in the merchandise information unit 331 (S55). Then, the control unit 300 causes the process to return to S51. When it is determined that the settlement key 421 is not operated (No in S54), the control unit 300 causes the process to return to S51.

In addition, when it is determined that a temporary settlement signal is not received from the merchandise reading apparatus 10 (No in S53), the control unit 300 determines whether or not the cancellation key 422 is operated (S56). When it is determined that the cancellation key 422 is operated (Yes in S56), the control unit 300 executes the cancellation process for deleting merchandise information of the merchandise which was immediately previously subjected to the sales registration process from the merchandise information unit 331 (S57). In this manner, the control unit 300 cancels the sales registration process of the merchandise which was immediately previously subjected to the sales registration process. Then, the control unit 300 causes the process to return to S51. When it is determined that the cancellation key 422 is not operated (No in S56), the control unit 300 causes the process to return to S51.

In the present embodiment, when it is determined that the imaged merchandise is code-symbolized merchandise, the control unit 100 does not execute processes relating to S41 to S50. That is, when it is determined that the imaged merchandise is code-symbolized merchandise, the control unit 100 does not execute the generic object recognition process.

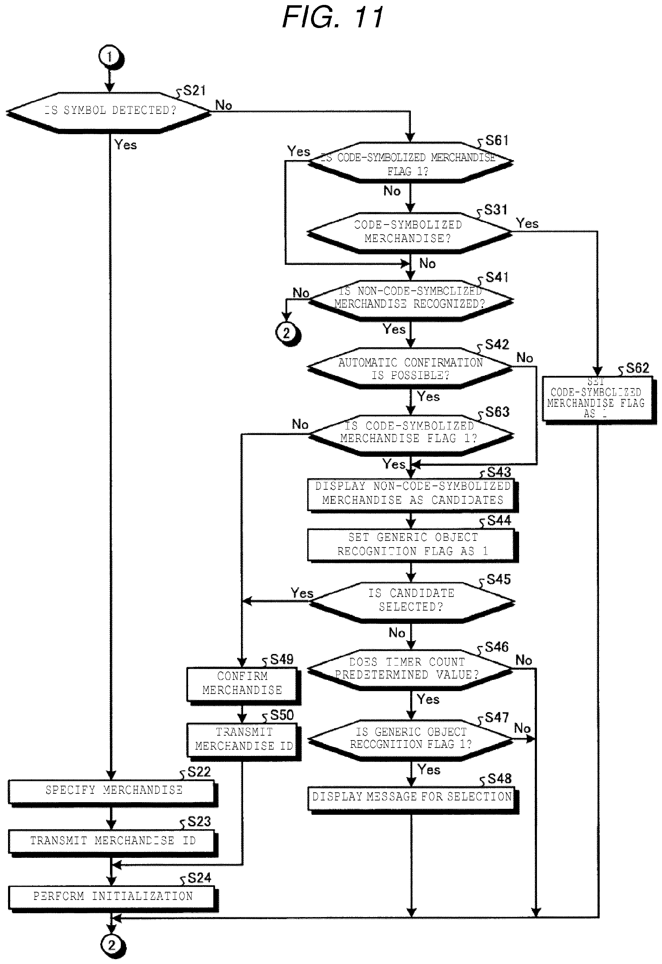

Hereinafter, the first modification example of the embodiment will be described. Fig. 11 is a flow chart showing the first modification example. In comparison with the process of the embodiment shown in Fig. 8, the first modification example is different in that when it is determined that the imaged merchandise is code-symbolized merchandise, the generic object recognition process is executed for the code-symbolized merchandise. In Fig. 11, the same reference numerals are given to the same processes as the processes in Fig. 8, and the descriptions thereof are not provided.

In the first modification example, the RAM 13 includes a code-symbolized merchandise flag unit in addition to the image storing unit 131, the merchandise detection flag unit 132, and the generic object recognition unit 133. When it is determined that the imaged merchandise is code-symbolized merchandise, the code-symbolized merchandise flag unit sets a code-symbolized merchandise flag "1". When it is determined that the imaged merchandise is not code-symbolized merchandise, the code-symbolized merchandise flag unit sets a code-symbolized merchandise flag "0". In addition, in the first modification example, in the process of S11, the code-symbolized merchandise flag unit is caused to set a code-symbolized merchandise flag "0", in addition to the merchandise detection flag unit 132 being caused to set the merchandise detection flag "0", the generic object recognition unit 133 being caused to set the generic object recognition flag "0", and the timer (not shown) being reset.

In Fig. 11, it is determined whether or not a code-symbolized merchandise flag is set as "1" (S61). When it is determined that the code-symbolized merchandise flag is not set as "1" (that is, the flag is set as "0") (No in S61), the process of S31 is executed. When it is determined that the imaged merchandise is code-symbolized merchandise (packaged merchandise and seal-wound merchandise) (Yes in S31), the control unit 100 sets the code-symbolized merchandise flag in the code-symbolized merchandise flag unit as "1" (S62). Then, the control unit 100 causes the process to return to S12. When it is determined that the code-symbolized merchandise flag is set as "1" (Yes in S61), the control unit 100 executes the process of S41, and in S42, it is determined whether or not the imaged merchandise can be automatically confirmed. That is, in S42, whether or not the automatic confirmation is possible is determined. In addition, in S42, whether or not the automatic confirmation for code-symbolized merchandise is possible is determined.

In some cases, it is determined that the automatic confirmation for non-code-symbolized merchandise is possible. In addition, it is not determined that the automatic confirmation of packaged merchandise is possible. However, in some cases, it is determined that the automatic confirmation for seal-wound merchandise among code-symbolized merchandise is possible. The reason is that when feature data of a non-code-symbolized merchandise of the same kind of leaf vegetable, to which a seal is not attached, is stored in the dictionary B 144, as a result of executing the generic object recognition process based on the leaf portion of the leaf vegetable, which is seal-wound merchandise, it may be determined that the automatic confirmation of the seal-wound merchandise concerned is possible.

The control unit 100 determines whether or not the automatic confirmation is possible. When it is determined that the automatic confirmation is possible (Yes in S42), the control unit 100 determines whether or not the code-symbolized merchandise flag set in the code-symbolized merchandise flag unit is "1" (S63). When it is determined that the code-symbolized merchandise flag is "1" (that is, it is determined that the automatic confirmation of the seal-wound merchandise is possible) (Yes in S63), the control unit 100 executes the process of S43. In the process of S43, the control unit 100 causes the display 22 for operator to display, as candidates, non-code-symbolized merchandise including non-code-symbolized merchandise corresponding to code-symbolized merchandise, for which automatic confirmation is determined to be possible in S42. Meanwhile, when it is determined that the code-symbolized merchandise flag is not "1" (that is, the merchandise is non-code-symbolized merchandise) (No in S63), the control unit 100 executes the process of S49.

In the first modification example, the control unit 100 executes the generic object recognition process for the imaged code-symbolized merchandise. Even when the merchandise is merchandise which has a degree of similarity exceeding a predetermined value and thus can be automatically confirmed, the merchandise is not automatically confirmed, and the display 22 for operator is caused to display, as candidates, a plurality of kinds of non-code-symbolized merchandise in which non-code-symbolized merchandise of which automatic confirmation is determined to be possible for the code-symbolized merchandise is regarded as one candidate. That is, in the first modification example, code-symbolized merchandise of which the symbol is not imaged, is not automatically confirmed. When a symbol is included in an image of merchandise which is imaged again during the display of non-code-symbolized merchandise, the merchandise can be recognized based on the symbol, and thus it is possible to more accurately confirm merchandise.

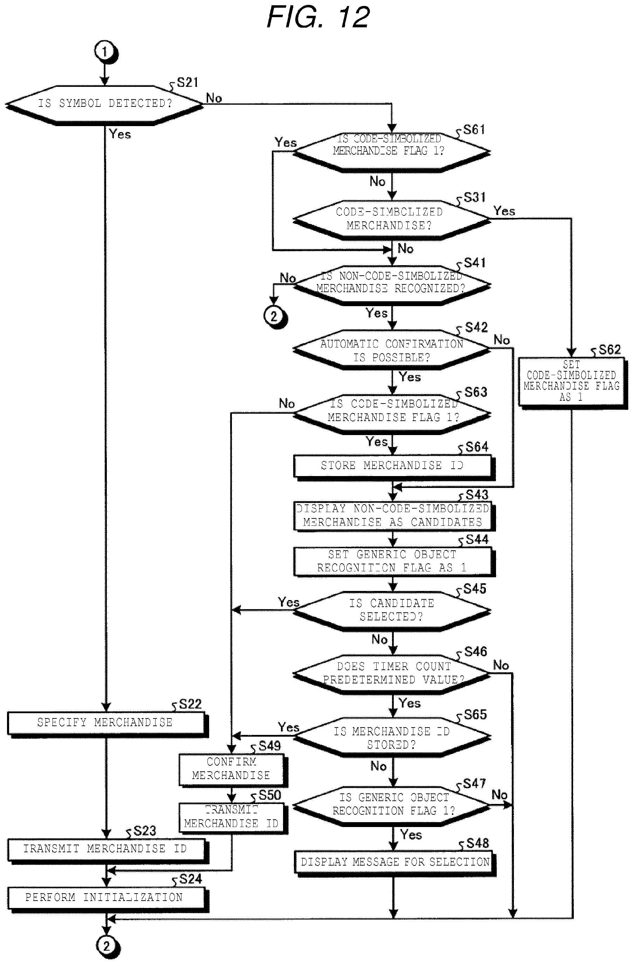

Next, the second modification example of the embodiment will be described. Fig. 12 is a flow chart showing the second modification example. The second modification example is the same as the first modification example in that even when the imaged merchandise is merchandise that can be automatically confirmed, the merchandise is not automatically confirmed, and a plurality of kinds of non-code-symbolized merchandise including non-code-symbolized merchandise corresponding to the imaged merchandise are displayed as candidates. In the second modification example, when a predetermined time elapses without one of the non-coded merchandise being selected, the non-code-symbolized merchandise, which can be automatically confirmed, is automatically confirmed as non-code-symbolized merchandise corresponding to the imaged merchandise. In Fig. 12, the same reference numerals are given to the same processes as the processes in Figs. 8 and 11, and the descriptions thereof are not provided.

In Fig. 12, when it is determined that the code-symbolized merchandise flag set in the code-symbolized merchandise flag unit is "1" (Yes in S63), the control unit 100 causes the RAM 13 to store a merchandise ID of non-code-symbolized merchandise corresponding to the imaged merchandise (S64). When it is determined that the timer clocked a predetermined value (Yes in S46), the control unit 100 determines whether or not the merchandise ID stored in S64 is stored in RAM 13 (S65). When it is determined that the merchandise ID is stored (Yes in S65), the control unit 100 executes the process of S49 for the merchandise corresponding to the merchandise ID. When it is determined that the merchandise ID is not stored (No in S65), the control unit 100 executes the process of S47.

In the second modification example, the control unit 100 executes the generic object recognition process for the imaged code-symbolized merchandise. When there is merchandise which has a degree of similarity exceeding a predetermined value, with respect to the imaged merchandise, and thus can be automatically confirmed, the merchandise ID of the non-code-symbolized merchandise corresponding to the imaged merchandise is stored. Then, the non-code-symbolized merchandise is not automatically confirmed, but a plurality of kinds of non-coded merchandise, in which the non-code-symbolized merchandise corresponding to the imaged merchandise is regarded as one candidate, are displayed as candidates on the display 22 for operator. Therefore, in the second modification example, merchandise to which a symbol is attached but of which symbol is not imaged, is not automatically confirmed.

In the second modification example, the control unit 100 automatically confirms the non-code-symbolized merchandise of the stored merchandise ID, on the condition that the timer clocked a predetermined time. In addition, when a symbol is included in an image of merchandise which is imaged again before the timer clocks a predetermined time, code-symbolized merchandise can be specified based on the symbol, and thus it is possible to more accurately confirm the merchandise.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

For example, in the above embodiment, the merchandise reading apparatus 10 is described as an example of the information processing apparatus. However, without being limited thereto, the POS terminal 30 may be used as the information processing apparatus. In this case, the POS terminal 30 receives information of a captured image which is captured by the merchandise reading apparatus 10 and executes a process of calculating the degree of similarity. The POS terminal 30 transmits a display instruction, and merchandise information (for example, merchandise ID) relating to the non-code-symbolized merchandise which is candidates, to the merchandise reading apparatus 10 so that the non-code-symbolized merchandise which is candidates are displayed on the merchandise reading apparatus 10. When a displayed non-code-symbolized merchandise is selected, the merchandise reading apparatus 10 transmits merchandise information (for example, merchandise ID) of the selected non-code-symbolized merchandise to the POS terminal 30.

In addition, in the above embodiment, both the merchandise reading apparatus 10 and the POS terminal 30 include the merchandise master, but one, not both, of the merchandise reading apparatus 10 and the POS terminal 30 may include the merchandise master.

In addition, in the above embodiment, the process of calculating the degree of similarity by the generic object recognition process is executed by the merchandise reading apparatus 10, but a part or all of the process may be executed by the POS terminal 30.

In the above embodiment, the dictionary A 143 and the dictionary B 144 are separate dictionaries, but the dictionary A 143 and the dictionary B 144 may be stored in divided areas within the same dictionary, respectively. In the above embodiment, the merchandise master 142 is provided separately from the dictionary A 143 and the dictionary B 144, but one or both of the dictionary A 143 and the dictionary B 144 may be included in the merchandise master 142, for example.

In the above embodiment, feature data indicating the common features of code-symbolized merchandise are stored in the dictionary A 143, but feature data indicating features of each of code-symbolized merchandise may be stored in the dictionary A 143. In this case, feature data of the imaged merchandise is compared with feature data of any of code-symbolized merchandise, which is stored in the dictionary A 143, and it is determined whether or not the imaged merchandise is code-symbolized merchandise.

In addition, in the embodiment, merchandise is described as an example of an article. However, the article may be an object other than the merchandise.

In addition, in the above embodiment, in the check-out system 1 having the POS terminal 30 and the merchandise reading apparatus 10, the merchandise reading apparatus 10 is described as the information processing apparatus. However, without being limited thereto, a single apparatus having the functions of the POS terminal 30 and the merchandise reading apparatus 10 may be used as the information processing apparatus. As the single apparatus having the functions of the POS terminal 30 and the merchandise reading apparatus 10, for example, a self-service check out apparatus which can be used at a store such as a supermarket (hereinafter, simply referred to as a self-service POS) is exemplified.

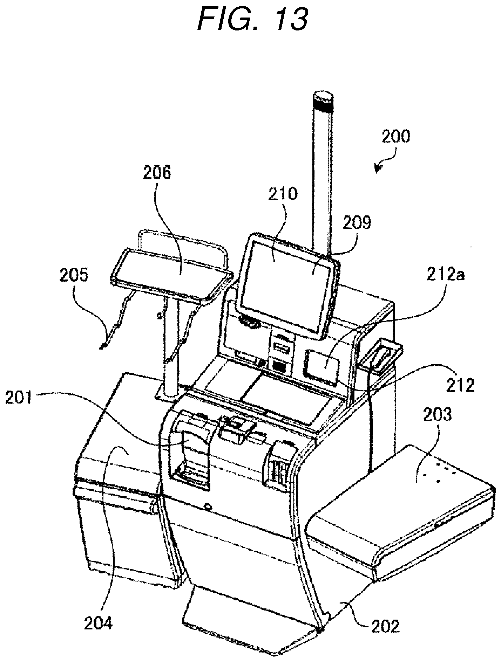

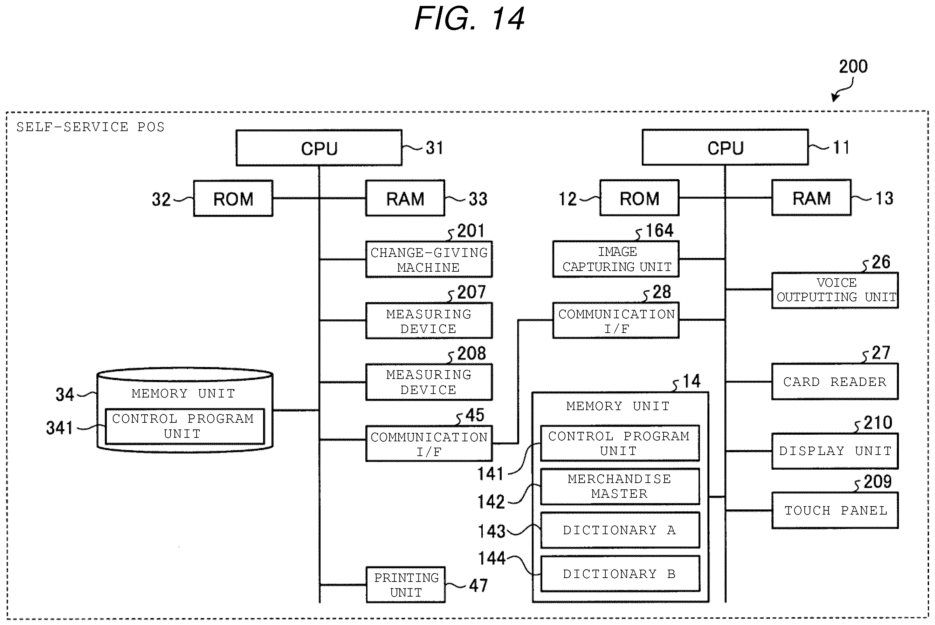

Here, Fig. 13 is a perspective view of an exterior configuration of a self-service POS 200, and Fig. 14 is a block diagram of a hardware configuration of the self-service POS 200. Also, hereinafter, same reference numerals are given to the same configurations as the configurations shown in Fig. 1 to Fig. 12, and duplicated descriptions thereof are not provided.

As shown in Figs. 13 and 14, a main body 202 of the self-service POS 200 includes a display unit 210 having a surface on which a touch panel 209 is disposed, and a merchandise reading unit 212 which reads a merchandise image for recognizing the merchandise.

As the display unit 210, for example, a liquid crystal display is used. The display unit 210 displays a guide screen for informing a customer of a method of operating the self-service POS 200, various input screens, a registration screen for displaying merchandise information read by the merchandise reading unit 212, a settlement screen which displays the total amount of purchase, a deposit amount, a change amount, and the like, and in which a payment method is selected.

The merchandise reading unit 212 reads a merchandise image using the image capturing unit 164 when the customer holds a code symbol attached to the merchandise, over a reading window 212a of the merchandise reading unit 212.

In addition, a merchandise placing table 203 on which merchandise that is in a basket and is not processed yet is placed is provided on the right side of the main body 202, and a merchandise placing table 204 on which merchandise that has been processed is placed is provided on the left side of the main body 202. In addition, a bag hook 205 for hooking a bag and a temporal placing table 206 for placing merchandise are provided. The merchandise placing tables 203 and 204 respectively include measuring devices 207 and 208, and have a function of confirming that the weight of the merchandise before the payment is the same as that after the payment.

In addition, a change-giving machine 201 for performing depositing bills for the settlement or receiving bills for change is disposed on the main body 202 of the self-service POS 200.

According to the self-service POS 200 having such a configuration, the self-service POS 200 functions as the information processing apparatus. Moreover, a single apparatus having the functions of the POS terminal 30 and the merchandise reading apparatus 10 is not limited to the self-service POS 200 having the above-described configuration, and may be an apparatus having a configuration in which the measuring devices 207 and 208 are not provided.

Also, a program executed in the merchandise reading apparatus 10 of the embodiment is provided by being recorded in a non-transitory computer readable recording medium, such as a CD-ROM, a flexible disk (FD), a CD-R, or a digital versatile disk (DVD), in a file with an installable format or an executable format.

In addition, a program executed in the merchandise reading apparatus 10 of the above embodiment may be stored in a computer connected to a network such as the Internet, and may be provided by being downloaded through the network. In addition, a program executed in the merchandise reading apparatus 10 of the above embodiment may be provided or distributed through a network such as the Internet.

In addition, a program executed in the merchandise reading apparatus 10 of the above embodiment may be provided by being incorporated in a ROM or the like in advance.

## Claims

1. An information processing system comprising:
an image capturing device;
a storage device in which first reference data and second reference data are stored, the first reference data including reference image data corresponding to a plurality of code-symbolized items having a code symbol thereon, and the second reference data including reference image data unique to each of non-code-symbolized items; and
a processor configured to:
control the image capturing device to start image capturing and start a code symbol detection process with respect to an image of a target item to be identified that is captured through the image capturing,
perform determination of whether or not the target item is a code-symbolized item, based on comparison of image data of the captured image of the target item with the first reference data,
perform a first identification process to identify the target item based on detection of a code symbol on the target item through the code symbol detection process, upon determining that the target item is the code-symbolized item, and
perform a second identification process to identify the target item based on comparison of the image data of the captured image of the target item with the second reference data, upon determining that the target item is not the code-symbolized item.

2. The information processing system according to claim 1, wherein
the processor performs the determination when no code symbol has been detected from the image of the target item through the code symbol detection process.

3. The information processing system according to claim 2, wherein
the processor does not perform the determination when a code symbol has been detected from the image of the target item through the code symbol detection process.

4. The information processing system according to any one of claims 1 to 3, wherein
the processor does not perform any identification process based on the second reference data, when the processor determines that the target item is the code-symbolized item.

5. The information processing system according to any one of claims 1 to 3, wherein
the processor is further configured to perform a third identification process to identify the target item based on comparison of the image data of the captured image of the target item with the second reference data, after the first identification process, when the processor determines that the target item is the code-symbolized item and cannot identify the target item through the first identification process.

6. The information processing system according to claim 5, wherein
the processor re-performs the first identification process, when the processor cannot identify the target item through the third identification process.

7. The information processing system according to claim 5 or 6, wherein
during the third identification process, the processor selects, as candidates, one or more non-code-symbolized items based on similarity between reference image data thereof included in the second reference data and the image data of the target item.

8. The information processing system according to claim 7, wherein
during the third identification process, the processor stores, in the storage device, an identifier of one of the candidates, upon determining that similarity between reference image data of said one of the candidates and the image data of the target item exceeds a threshold, and determines the target item to be said one of the candidates when none of the candidates has been selected by a user to be the target item for a predetermined period of time.

9. The information processing system according to any one of claims 1 to 8, wherein the reference image data of the first reference data are common to the plurality of code-symbolized items.

10. The information processing system according to claim 9, wherein the reference image data of the first reference data include data of a package shape common to the plurality of code-symbolized items.

11. A method of identifying an item based on a captured image thereof, comprising:
starting image capturing by an image capturing device and a code symbol detection process with respect to an image of a target item to be identified that is captured through the image capturing;
performing determination of whether or not the target item is a code-symbolized item, based on comparison of image data of the captured image of the target item with first reference data stored in a storage device, the first reference data including reference image data corresponding to a plurality of code-symbolized items having a code symbol thereon;
upon determining that the target item is the code-symbolized item, performing a first identification process to identify the target item based on detection of a code symbol on the target item through the code symbol detection process; and
upon determining that the target item is not the code-symbolized item, performing a second identification process to identify the target item based on comparison of the image data of the captured image of the target item with second reference data stored in the storage device, the second reference data including reference image data unique to each of non-code-symbolized items.

12. The method according to claim 11, wherein the determination is performed when no code symbol has been detected from the image of the target item through the code symbol detection process.

13. The method according to claim 11 or 12, further comprising:
upon determining that the target item is the code-symbolized item and that the target item has not been identified through the first identification process, performing a third identification process to identify the target item based on comparison of the image data of the captured image of the target item with the second reference data, after the first identification process.

14. The method according to claim 13, wherein the third identification process comprises:
selecting, as candidates, one or more non-code-symbolized items based on similarity between reference image data thereof included in the second reference data and the image data of the target item.

15. A non-transitory computer-readable medium storing instructions to cause a computing device to carry out a method of identifying an item based on a captured image thereof aaccording to any one of claims 11 to 14.
